# EUROPEAN PATENT APPLICATION

(11) **EP 1 901 264 A1**
(43) Date of publication of application: **19.03.2008**
(21) Application number: 06380247.4
(22) Date of filing: 15.09.2006
(51) Int. Cl.: G09F 21/04, B62D 63/06

(54) **Trolley with an advertising support**

(71) Applicant: Sanchiz Yrazu, Juan, 01005 Vitoria-Gasteiz (ES)
(72) Inventor: Sanchiz Yrazu, Juan, 01005 Vitoria-Gasteiz (ES)
(74) Representative: Carvajal y Urquijo, Isabel

(57) **Abstract**

The invention relates to an advertising trolley comprising a rolling planar frame (1), a horizontal platform (2) secured on the frame and a longitudinal advertising support (13) assembled on the platform. The frame (1) has a front longitudinal beam (6) for the connection to a bicycle (17).

## Description

### Field of the Invention

The present invention relates to a trolley with an advertising support conceived to be towed by a two-wheeled vehicle, preferably by a bicycle, although it could also be adapted to a motorcycle.

The trolley of the invention is conceived as a moveable advertising support which can be towed by a bicycle and with a longitudinal vertical panel which will form the advertising support.

### Background of the Invention

Moveable advertising trolleys are already known, these trolleys are towed by motor vehicles which considerably increases the cost of the advertising campaign, both in the cost of the vehicle and the fuel consumption thereof and due to the cost of the towable trolley or platform.

### Description of the Invention

The object of the present invention is to eliminate the drawback set forth by means of trolley of a simple constitution and reduced cost serving as an advertising support and conceived to be towed by a bicycle, such that it can be used as a moveable advertising support with a small investment compared to traditional advertising supports towed by motor vehicles.

The trolley of the invention is formed by a rolling planar frame of a simple structure on which a horizontal platform is fixed, which platform carries a longitudinal advertising support.

The frame has a rear transverse axle with two freely rotating support wheels and a front longitudinal beam for connecting it to a bicycle pulling it. This frame can be formed by two perpendicular bars, a longitudinal bar extending at one end in the mentioned beam and a transverse bar next to the opposite end of the longitudinal bar which will form the axle on which the aforementioned support wheels are assembled.

With this constitution, the platform will be supported on the two bars forming the frame and these will be fixed to the platform by means of lower securing elements which can be formed for example by half clamps surrounding one or both bars and are secured to the platform.

The advertising support can consist of a vertical panel on the surfaces of which advertising messages will be arranged. In order to secure the panel, the platform can have in its upper part two longitudinal walls, between which the lower edge of the panel is introduced until it is supported on the platform. The panel is fixed to the mentioned two walls by means of screws or pins which will be introduced through opposite holes made both in the walls and in the panel.

The advertising support can also be formed by two inclined panels, from an upper edge parallel to the platform, adopting the shape of a partially open and reversed book. The two panels will be supported at their lower edge on the platform, between longitudinal walls projecting from the upper surface of said platform and to which the panels are fixed by means of screws that can be introduced through opposing holes made in the walls and panels.

The panel or panels forming the advertising support are further formed such that they allow substituting the advertising messages easily and simply. To that end, the advertising messages can be printed on sheets that are attached to the surfaces of the panel or panels, being able to be fixed thereto by means of a removable adhesive substance or by means of a removable peripheral frame.

The beam of the trolley can be finished at its free end with a hitch for the connection to a bicycle, for example to the post of the seat, this hitch being able to be conceived as a clamp assembled on the post of the seat, in order to define therewith a shaft joint coinciding with the post of said seat.

The beam can also be subdivided into two independent sections, one of which is integral with the longitudinal bar of the frame as an extension thereof whereas the other section is fixed to the bicycle, the two sections being linked by means of a vertical shaft joint. The section which is fixed to the bicycle can be fixed to the post of the seat, to the rear axle of the wheel etc.

### Brief Description of the Drawings

The constitution, features and advantages of the trolley of the invention can be better understood with the following description made in reference to the attached drawings, in which a non-limiting embodiment is shown.

In the drawings:
Figure 1 shows a perspective view of a trolley formed according to the invention.
Figure 2 shows an exploded perspective view of the trolley of Figure 1.
Figure 3 shows a view similar to that of Figure 1, showing an implementation variant.
Figures 4 and 5 show a perspective view of two variants for connecting the trolley to the bicycle pulling it.

### Detailed Description of an Embodiment

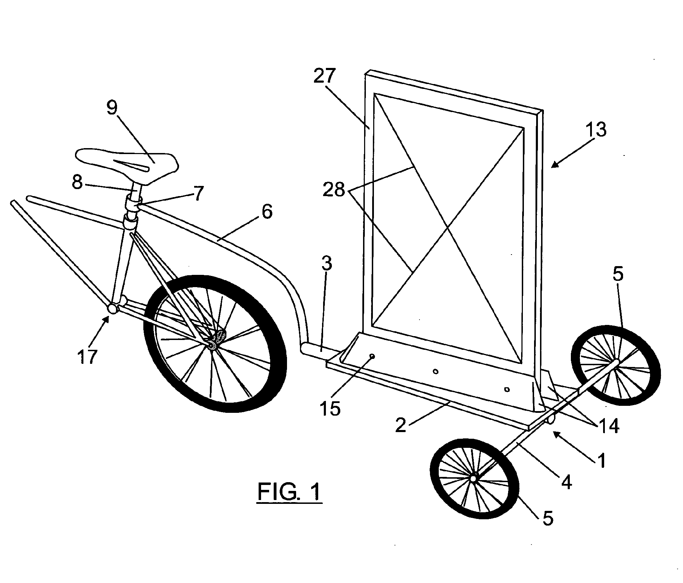

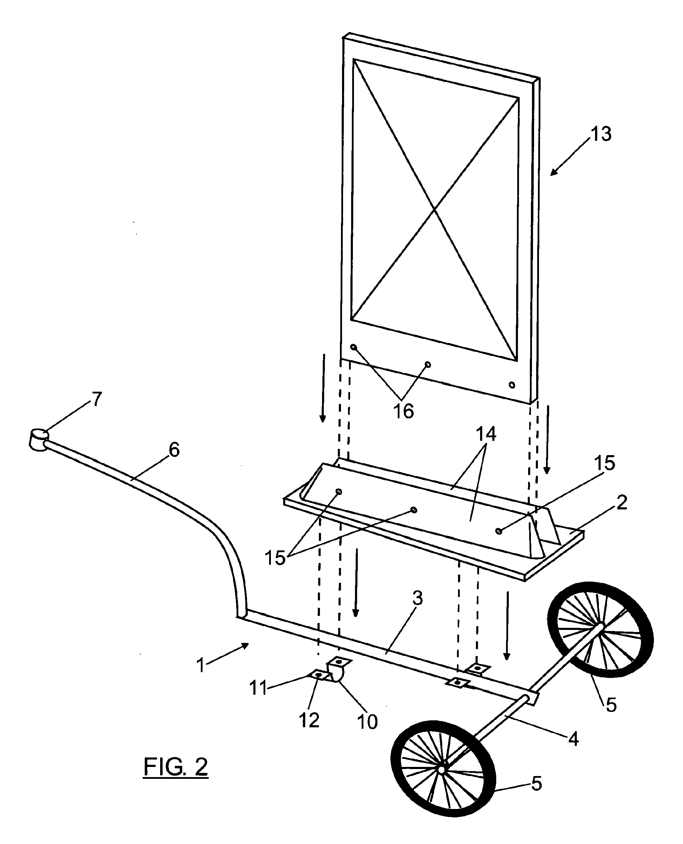

The trolley shown in Figures 1 and 2 is formed by a rolling frame 1 on which an upper platform 2 is assembled.

The frame 1 defines a planar structure formed by two perpendicular bars, a longitudinal bar with reference number 3 and another transverse bar 4 located near of one of the ends of the bar 3 and carrying two freely rotating wheels 5. The longitudinal bar 3 is extended at its free end in a beam 6 which may be finished at its free end with a clamp 7 for its connection to the post 8 of the seat 9, the clamp 7 and the post 8 determining a shaft hinge coinciding with that of said post 8.

As has been indicated, the bars 3 and 4 define a planar structure on which the platform 2 is supported, which platform can be fixed, for example, by means half clamps 10 embracing the bar 3 and having lobes 11 which will be supported on the lower surface of the platform 2, to which the bar will be fixed by means of screws that can be introduced through the holes 12 of the mentioned-lobes.

A vertical longitudinal panel 13, the surfaces of which will form the supports for the advertising messages, is arranged on the platform 2. In order to fix this panel 13 to the platform 2, said platform can have in its upper part two longitudinal walls 14, between which the panel 13 is introduced such that its lower edge is supported on the platform 2. The fixing is carried out by means of screws that can be introduced through holes 15 and 16 made in opposing positions in the walls 14 and the panel 13.

A trolley of a simple constitution and reduced weight which can be easily towed by a bicycle 17 is provided with the commented constitution.

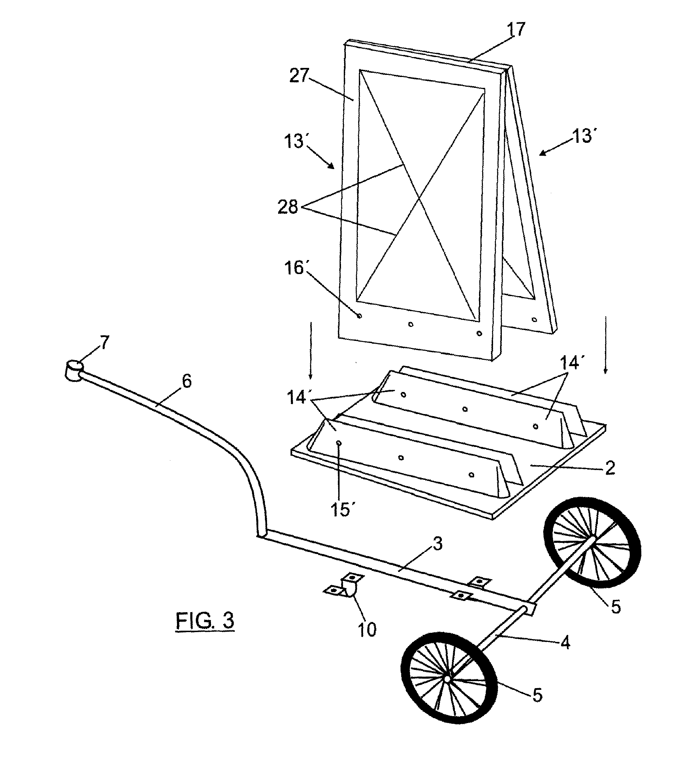

Figure 3 shows an implementation variant in which the advertising support is formed by two inclined panels 13' starting from a common upper edge 17. The platform 2 has slightly larger dimensions and has two pairs of walls 14', between each of which one of the panels 13', the lower edge of which is supported on the platform 2, is introduced. As in the previous case, the walls 14' and the panels 13' have opposing holes 15' and 16' for the introduction of securing screws and pins.

In the case of Figure 3, the platform 2 could simply have two outer walls 14', on the inside of which the two panels 13' would be supported. In all the other respects, the embodiment shown in Figure 3 coincides with the one described in reference to Figures 1 and 2, using the same references to designate the coinciding elements.

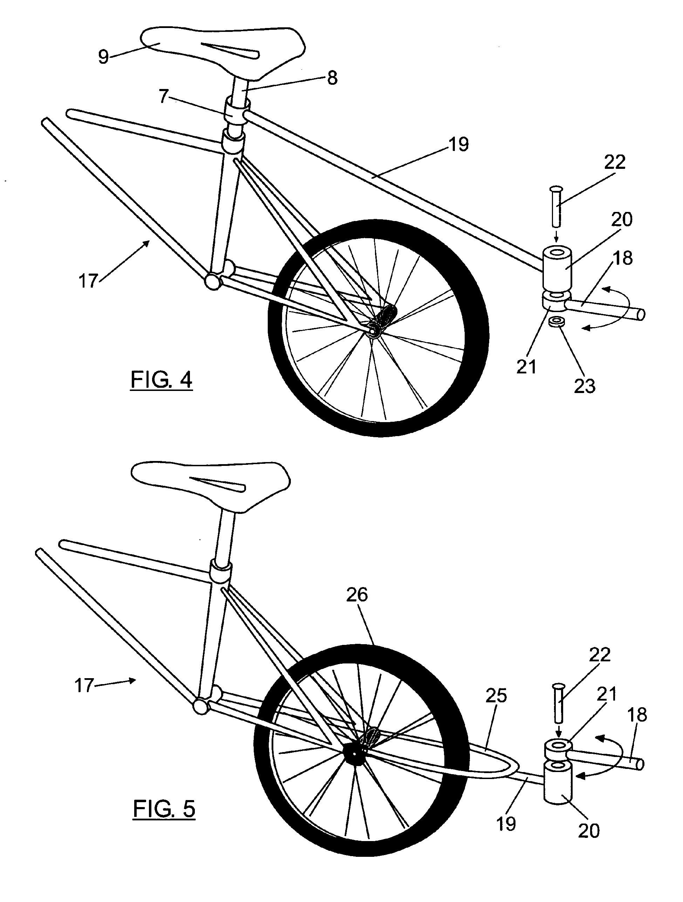

Figures 4 and 5 show two variants for connecting the trolley to the bicycle 17. In both cases, the beam is subdivided into two sections, a rear section 18 which is the extension of the longitudinal bar 3 of the frame, and another front section 19 which is fixed to the bicycle 17. The two sections are linked together by means of a vertical shaft joint which may be formed by a bushing 20 integral with section 19 and a washer 21 finishing section 18, both with opposing bore holes through which a fastening pin 22 that can be fixed by a nut 23 for example is introduced.

In the embodiment of Figure 4, section 19 is finished with a clamp 7 which can be coupled on the pole 8 of the seat 9 in a manner coinciding with the one described with reference to Figure 1.

-In the embodiment shown in Figure 5, section 19 forms a yoke 25 the ends of which are formed to be fixed to the ends of the axle of the rear wheel 26 with the brackets thereof, or to holes made in the rear yoke outside the opening for the coupling to the axle of the wheel.

In any case, the joint defined by sections 18 and 19 can be limited by a 180° turn such that a minimum angle of 90° can be formed between the bicycle 17 and the trolley of the invention without said trolley nearing the bicycle at its sides.

The panel 13 or panels 13' can include an easily removable peripheral frame 27 made up for example of profiles which will serve as an element for protecting and fastening the sheet or sheets which are attached on the visible surfaces of the panels and which will have the printed advertising motifs. These sheets can be fixed to the panels by means of an adhesive or simply by means of frames 27 and elastic strips 28 crossing the frames in the form of a cross. In any case, a system which allows easily substituting the sheet or sheets printed with advertising messages will be used for the panels.

## Claims

1. - An advertising trolley **characterized in that** it comprises a rolling planar frame, a horizontal platform secured on the frame and a longitudinal advertising support assembled on the platform; the frame of which comprises a rear transverse axle with two freely rotating support wheels and a front longitudinal beam for its connection to the bicycle pulling it; and the platform of which has removable securing means for fixing the advertising support.

2. - A trolley according to claim 1, **characterized in that** the mentioned frame is formed by two perpendicular bars, a longitudinal bar extending at one end in the mentioned beam, and a transverse bar forming the axle on which the wheels are assembled and which is located next to the opposite end of the longitudinal bar.

3. - A trolley according to claim 1, **characterized in that** the mentioned platform is supported on the two mentioned bars, to which it is fixed by means of lower securing elements.

4. - A trolley according to claim 1, **characterized in that** the advertising support consists of a vertical panel and the mentioned platform can have in its upper part two longitudinal walls, between which the panel is arranged and to which said panel is fixed by means of screws or pins that can be introduced through opposite holes made in the walls and the panel.

5. - A trolley according to claim 1, **characterized in that** the advertising support is formed by two inclined panels defining an upper edge parallel to the platform and being supported at their lower edge on the platform between longitudinal walls to which said panels are fixed by means of screws that can be introduced through opposite holes made in the walls and panels.

6. - A trolley according to claim 1, **characterized in that** the beam is connected to the bicycle by means of a hitch forming a vertical shaft joint.

7. - A trolley according to claims 1 and 2, **characterized in that** the mentioned beam is subdivided into two independent sections, a rear section which is the extension of the longitudinal bar of the frame, and another front section which is fixed to the bicycle, said two sections being linked by means of a vertical shaft joint.
